# EUROPEAN PATENT SPECIFICATION

(11) **EP 1 874 865 B1**
(45) Date of publication and mention of the grant of the patent: **15.10.2008**
(21) Application number: 06749416.1
(22) Date of filing: 06.04.2006
(51) Int. Cl.: C08L 51/06, C08L 67/02, C08L 69/00, C08K 3/00, C08K 5/00

(54) **THERMOPLASTIC BLENDS AND ARTICLES MADE THEREFROM**
THERMOPLASTISCHE MISCHUNGEN UND DARAUS HERGESTELLTE ARTIKEL
MELANGES THERMOPLASTIQUES ET ARTICLES FABRIQUES A PARTIR DE CES MELANGES

(30) Priority: 14.04.2005 US 671121 P; 06.07.2005 US 175242
(43) Date of publication of application: 09.01.2008
(73) Proprietor: Sabic Innovative Plastics IP B.V., 4612 PX Bergen op Zoom (NL)
(72) Inventor: CONT, Nicola, 4611 BZ Bergen op Zoom (NL); LIU, Bo, Coatesville, Pennsylvania 19320 (US); ZHANG, Xiaomin, Shanghai (CN); AMARASEKERA, Jayantha, Exton, Pennsylvania 19341 (US)
(74) Representative: Gesthuysen, von Rohr & Eggert
(86) International application number: PCT/US2006/012812
(87) International publication number: WO 2006/113142

(56) References cited:
- US-A- 4 889 898
- US-A- 5 420 199
- US-A1- 2004 152 837
- DATABASE WPI Section Ch, Week 198649 Derwent Publications Ltd., London, GB; Class A23, AN 1986-322288 XP002390562 -& JP 61 238847 A (TEIJIN LTD) 24 October 1986 (1986-10-24)

## Description

### FIELD OF THE INVENTION

The invention relates to a thermoplastic composition with good fatigue, good dimensional stability, internally lubricated properties and articles made thereof.

### BACKGROUND OF THE INVENTION

Polycarbonate resins have been widely used in the field of automobiles and electricity owing to their excellent heat resistance, impact resistance, and electric properties as well as good dimensional stability. In the prior art, polycarbonate is mixed with a polyolefin to alleviate some of the inherent properties of polycarbonate such as high melt viscosity and poor organic solvent resistance as well as poor abrasion/friction properties. See for example, Japanese Patent Publication No. 40(1965)-13664 and Japanese Patent Application Laid-Open No. 59(1984)-22371-). US Patent No. 5,021,504 discloses a composition comprising 5-95 parts by wt. of (a) a polyolefin; (b) 5-95 parts by wt. of polycarbonate; and (c) 2-100 parts by wt. (per 100 parts by wt. of (a) and (b) of a modified polyolefin; and (d) 2-100 parts by wt. by weight, per 100 parts by weight of (a) and (b), of polybutylene terephthalate.

In some applications in the prior art, polycarbonate is mixed with a polystyrene-polyolefin copolymer such as SEBS (styrene-ethylene/butylene-styrene copolymer), SEP (styrene-ethylene/propylene), or the like (See for example, Japanese Patent Application Laid-Open No. 64 (1989)-75543).

Aromatic polyester resin, e.g., polybutylene terephthalate (PBT) resin, is a thermoplastic material used for molded articles, fibers, films, etc., with its excellent physical and mechanical properties such as thermal resistance and solvent resistance.

However, articles molded from PBT resin lack the required impact strength and dimensional stability owing to shrinkage by crystallization.

Japanese Laid-Open Patent Publication No. 59858/1992 discloses a resin comprising polyester and a modified polypropylene. US Patent No. 4,889,898 discloses a composition comprising 5 - 95 wt. % of a polyalkylene terephthalate; 5-95 wt. % of a polycarbonate; and 1 - 20 wt. % of an acid-modified polyolefin. US Patent No. 5,420,199 discloses a composition with 50 to 90 wt. % PBT, 5 to 40 % wt. % of a polyolefin modified by an unsaturated monomer having a glycidyloxy group and an unsaturated monomer having a carboxyl group or an acid anhydride group, and 5 to 40 wt. % of a polycarbonate for improved toughness, rigidity, strength and dimensional stability properties.

There remains a need for a thermoplastic composition with balanced toughness, rigidity, strength, fatigue, dimensional stability, heat resistance and particularly wear properties, for the fabrication of shaped parts wherein improved friction, surface wear, accuracy of the molded parts and long-life properties are much needed.

### SUMMARY OF THE INVENTION

In the embodiment, according to claim 1 the invention relates to a thermoplastic composition consisting essentially of 35 to 50 wt. % of a polycarbonate; 35 to 50 wt. % of a polyalkylene terephthalate, a polyalkylene naphthanoate resin, or blends thereof; 0.5 to 4 wt. % of a modified polyolefin, and (2) to 30 wt. % of a flame retardant agent.

In another embodiment of the invention, the composition consists essentially of a) 35 to 50 wt. % of a polycarbonate; b) 35 to 50 wt. % of a poly (1,4-butylene terephthalate; c) 0.5 to 4 wt. % of a modified polyolefin copolymerized there with an unsaturated monomer containing an acid, an acid anhydride, or epoxy group by any desired means, or a polyolefin modified with functional groups containing imide acid; and d) 5 to 30 wt. % of a brominated flame retardant;

### DETAILED DESCRIPTION OF THE INVENTION

The invention relates to an internally lubricated thermoplastic composition with balanced fatigue and dimensional stability properties, wherein a small amount of modified polyolefin is used as a lubricant and / or compatibilizer, for use in making molded articles with excellent wear performance.

Component A of the composition of the invention is a polycarbonate, in an amount of 35 to 50 wt. % of the total composition. In one embodiment, component A is present in an amount of less than 50 wt. %. In a second embodiment, this amount is between 25 to 50 wt. %.

The term polycarbonate resin is understood to encompass polymers comprising aromatic carbonate chain units include compositions having structural units of the formula (I): 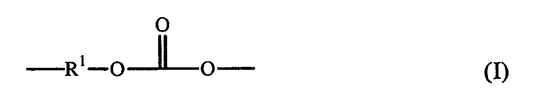 in which the R¹ groups are aromatic, aliphatic or alicyclic radicals. Preferably, R¹ is an aromatic organic radical and, more preferably, a radical of the formula (II): 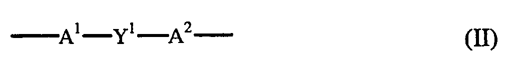 wherein each of A¹ and A² is a monocyclic divalent aryl radical and Y¹ is a bridging radical having zero, one, or two atoms which separate A¹ from A². In an exemplary embodiment, one atom separates A¹ from A². Illustrative examples of radicals of this type are -O-, -S-, -S(O)-, -S(O₂)-, -C(O)-, methylene, cyclohexyl-methylene, 2-[2,2,1]-bicycloheptylidene, ethylidene, isopropylidene, neopentylidene, cyclohexylidene, cyclopentadecylidene, cyclododecylidene, adamantylidene, or the like. In another embodiment, zero atoms separate A¹ from A², with an illustrative example being bisphenol. The bridging radical Y¹ can be a hydrocarbon group or a saturated hydrocarbon group such as methylene, cyclohexylidene or isopropylidene.

Polycarbonates may be produced by the Schotten-Bauman interfacial reaction of the carbonate precursor with dihydroxy compounds. Branching agents may also be added singly or in admixture. Polycarbonates can be produced by the interfacial reaction polymer precursors such as dihydroxy compounds in which only one atom separates A¹ and A². It is also possible to employ polycarbonates resulting from the polymerization of two or more different dihydric phenols or a copolymer of a dihydric phenol with a glycol or with a hydroxy- or acid-terminated polyester or with a dibasic acid or with a hydroxy acid or with an aliphatic diacid in the event a carbonate copolymer rather than a homopolymer is desired for use. The polycarbonate may also be produced by a melt polycondensation reaction between a dihydroxy compound and a carbonic acid diester.
In one embodiment, the aromatic polycarbonate resin is selected from polycarbonate homo-polymers and polyester carbonate copolymers. In another embodiment, the polycarbonate resin comprises one or more resins selected from linear aromatic polycarbonate resins, branched aromatic polycarbonate resins and poly(ester-carbonate) resins. Examples include bisphenol A polycarbonate resin. In another embodiment, the aromatic polycarbonate resin comprises siloxane-polycarbonate block copolymers made by introducing phosgene under interfacial reaction conditions into a mixture of a dihydric phenol, such as BPA, and a hydroxyaryl-terminated polydiorganosiloxane.
Component B. Component B of the composition is a polyalkylene terephthalate, a polyalkylene naphthanoate resin, or blends thereof, in an amount of 35 to 50 wt. % of the total composition. In one embodiment, component B is present in an amount of from 40 to 50 wt. %. Examples include poly(ethylene terephthalate) ("PET"), poly(1,4-butylene terephthalate) ("PBT"), poly(ethylene naphthanoate) ("PEN"), poly(butylene naphthanoate) ("PBN"), (polypropylene terephthalate) ("PPT"), and mixtures thereof.

Stable polyblends of two or more of the polyesters, such as blends of poly(1,4-butylene terephthalate) and poly(ethylene terephthalate) also can be used.

Also contemplated herein are the above polyesters with minor amounts, e.g., from about 0.5 to about 5 percent by weight, of units derived from aliphatic acid and/or aliphatic polyols to form copolyesters. The aliphatic polyols include glycols, such as poly(ethylene glycol) or poly(butylene glycol). Such polyesters can be made following the teachings of, for example, U.S. Pat. Nos. 2,465,319 and 3,047,539.

In one embodiment, component B is poly(1,4-butylene terephthalate) or "PBT" resin and is obtained by polymerizing a glycol component at least 70 mol %, preferably at least 80 mol %, of which consists of tetramethylene glycol and an acid or ester component at least 70 mol %, preferably at least 80 mol %, of which consists of terephthalic acid, and polyester-forming derivatives therefore. Examples are VALOX® polyester resins from General Electric Company, having an intrinsic viscosity of 0.4 to about 2.0 dl/g as measured in a 60:40 phenol/tetrachloroethane mixture or similar solvent at 23°-30° C. In one embodiment, the PBT resin has an intrinsic viscosity of 1.1 to 1.4 dl/g.

Component C. Component C of the invention is a modified polyolefin in an amount of 0.5 to 4 wt. %. In one embodiment, component C is present in an amount of 1 to 4 wt. %. In a second embodiment, component C is in an amount of greater than 2 wt. %. In one embodiment, component C is a modified polyolefin in an amount of less than 4 wt. % of the total weight of the composition.

The polyolefin can be a high density polyolefin (e.g., HDPE), low density polyolefin (e.g., LDPE), or a linear low density polyolefin. The polyolefin need not be a homopolymer, e.g., in the case of polypropylene, it may be a copolymer of propylene with up to 20 weight % of other one or more α-olefins. The modified polyolefin is a polyolefin copolymerized there with an unsaturated monomer containing an acid, an acid anhydride, an epoxy group, an acid amide group or an imide group. In one embodiment, the modified polyolefin is a polyolefin modified with functional groups containing imide acid. In another embodiment, the modified polymer is modified polyolefin is a polymer formed by introducing a monomer having at least one kind of functional group selected from the group consisting of a carboxylic acid metal salt group or a carboxylic acid exter group.

Exemplary means for copolymerizing the modified polyolefins include melt kneading of the resin with the unsaturated monomer in a twin screw extruder, a Banbury mixer, a kneading machine, or the like in the presence or absence of a radical initiator, and copolymerization by the co-presence of the monomer constituting the polyolefin resin with the unsaturated monomer containing epoxy, carboxyl, or acid anhydride. The above reaction can also be carried out by s solution method.

Exemplary unsaturated monomers containing an acid include acrylic acid, citraconic acid, aconitic acid, itaconic acid, citric acid, fumaric acid, methacrylic acid, maleic acid, cyclohexenedicarboxylic acid, and the like.

Exemplary unsaturated monomers containing acid anhydride groups include maleic anhydride, itaconic anhydride, citraconic anhydride, cyclohexenedicarboxylic anhydride, and the like.

Exemplary epoxy-containing unsaturated monomers include glycidyl methacrylate, butylglycidyl malate, butylglycidyl fumarate, propylglycidyl malate, glycidyl acrylate, N->4-(2,3-epoxypropoxy)-3,5-dimethylbenzyl!-acrylamide, and the like. Among these, the preferred are glycidyl methacrylate and N->4-(2,3-epoxypropoxy)-3,5-dimethylbenzyl!acrylamide in view of their price and availability.

Exemplary polyolefin modified with functional groups include imide acid can be obtained by modifying maleic anhydride graft polyolefin with a compound represented by COOC-R-NH2, wherein R represents at least one member selected from the group consisting of an alkene group, an alkylidene group, and an oligomethylene group containing 5 or more carbon atoms, and phenylene group and naphthylene group optionally substituted with an alkyl group

In one embodiment of a modified polyolefin, the acid, the acid anhydride, the acid amide group, the imide group or the epoxy group may be present at a content in the range of from 0.01 to 10% by weight of the polyolefin.

As used herein, a rubbery elastomer means a rubbery high-molecular weight material, either natural or synthetic, showing elasticity at room temperature. The material can be either a homopolymer or a copolymer. Examples of copolymers and core-shell graft copolymers include the AB (diblock) and ABA (triblock) copolymers and core-shell graft copolymers of alkenyl aromatic and diene compounds, especially those comprising styrene and butadiene or isoprene blocks. The conjugated diene blocks may be partially or entirely hydrogenated, whereupon they may be represented as ethylene-propylene blocks or the like and have properties similar to those of olefin block copolymers. Examples of triblock copolymers of this type are polystyrene-polybutadiene-polystyrene (SBS), hydrogenated polystyrene-polybutadiene-polystyrene (SEBS), polystyrene-polyisoprene-polystyrene (SIS), poly(a-methylstyrene)-polybutadiene-poly(a-methylstyrene) and poly(a-methylstyrene)-polyisoprene-poly(a-methylstyrene).
Component D The composition includes a flame retardant in an amount of 2 to 30 wt. %. In one embodiment, component D is in an amount of 5 to 15 wt. %.

In one embodiment, the flame retardant is a halogen-containing compound or mixture of compounds which imparts flame resistance to the compositions of the present invention. Examples include brominated compounds, e.g., a hexabromocycledodecane, a decabromodiphenyl ether, a tribromophenylallyl ether, or a chlorine type flame retardant such as chlorinated paraffin. Synergistic combinations, such as mixtures of one or more halogenated compounds and one or more flame retardant synergists, may also be used. In one embodiment, the flame retardant is a brominated BPA, such as TBBPA Oligomer (Tetrabromobisphenol-A) or TBBPA / BPA (bisphenol A, BPA) copolymer.

In another embodiment, the flame retardant is a phosphoric ester type flame retardant, a halogenated phosphoric ester type flame retardant, a polyphosphate type flame retardant or a red phosphorus type flame retardant. Examples include non-halogenated phosphorus type flame retardants, e.g., a monomer type phosphoric ester type flame retardant such as triphenyl phosphate (TPP), or a condensed phosphoric ester type flame retardant such as 1,3-phenylenebis(diphenylphosphate) or bisphenol A-bis(diphenylphosphate) (BADP). Examples of polyphosphate type flame retardant include ammonium polyphosphate (APP) or melamine polyphosphate (MPP). In yet another embodiment, the flame retardant is a flame retardant other than the phosphorus type flame retardant may be added. As such a flame retardant, a metal hydroxide flame retardant such as magnesium hydroxide, aluminum hydroxide, a metal oxide flame retardant such as antimony tetraoxide, molybdenum oxide, tin oxide (SnO) or zinc oxide (ZnO).

Other Optional Components. In one embodiment, in addition to a flame retardant, the composition may further contain an antidripping agent in an amount of less than 10 wt. %, selected from the group of fluorine resins such as polymonofluoroethylene, polychlorotrifluoroethylene, polytetrafluoroethylene (hereinafter referred to as PTFE), polyvinylidene fluoride, a tetrafluoroethylene / hexafluoropropylene copolymer, a tetrafluoroethylene / perfluoro(alkyl vinyl ether) copolymer or an ethylene/tetrafluoroethylene copolymer.

The composition may optionally further comprise other wear additives or lubricants known in the art, e.g., polyolefin wax, polytetrafluoroethylene (PTFE), molybdenum disulfide (MoS₂), graphite, aramide, carbon fibers, carbon powder, combinations comprising at least one of the foregoing additives, and the like. The amount of additive present in the composition may be about 0 to about 20 weight percent, more specifically about 1 to about 15 weight percent, or even more specifically about 5 to about 10 weight percent based on the total weight of the composition.

The composition may optionally further comprise filler, including fibrous filler and/or low aspect ratio filler. Suitable fibrous filler may be any conventional filler used in polymeric resins and having an aspect ratio greater than 1. Such fillers may exist in the form of whiskers, needles, rods, tubes, strands, elongated platelets, lamellar platelets, ellipsoids, micro fibers, nanofibers and nanotubes, elongated fullerenes, and the like. Where such fillers exist in aggregate form, an aggregate having an aspect ratio greater than 1 will also suffice for the fibrous filler.

Other customary additives may be added to all of the resin compositions at the time of mixing or molding of the resin in amounts as necessary which do not have any deleterious effect on physical properties. For example, coloring agents (pigments or dyes), heat-resistant agents, oxidation inhibitors, organic fibrous fillers, weather-proofing agents, lubricants, mold release agents, plasticizer, and fluidity enhancing agents, and the like, may be added.

It should be clear that the invention encompasses reaction products of the above-described compositions.

Method for Making the Composition. The preparation of the compositions may be achieved by blending the ingredients under conditions for the formation of an intimate blend. All of the ingredients may be added initially to the processing system, or else certain components may be precompounded with one or more of the other components. The blend may be formed by mixing in single or twin screw type extruders or similar mixing devices which can apply a shear to the components.

In one embodiment, the composition is produced by a conventional method for producing a thermoplastic resin composition by e.g. melting simultaneously with mixing (for example melt-kneading) or by melt kneading after mixing. In another embodiment, the mixing is followed by extrusion molding to obtain a pellet form or particle-form molding material.

Articles Made from the Compsition. In one embodiment, the compositions are used to prepare molded articles such as for example, durable articles, structural products, and electrical and electronic components, and the like. The compositions may be converted to articles using common thermoplastic processes such as film and sheet extrusion, injection molding, gas-assisted injection molding, extrusion molding, compression molding and blow molding. Articles made from the composition of the invention are characterized as having excellent mechanical properties, abrasion resistance, chemical resistance and surface characteristics (non-sticking property, low friction property).

In one embodiment, the composition is used for working parts traditionally made with thermoplastics such as polyacetals (or Polyoxymethylene), having the required mechanical properties such as stiffness, fatigue, thermal resistance and creep resistance. However, polyacetals are not UL-rated and dimensional stability is not good. Therefore, the composition of the invention is particularly useful for good fatigue, good dimensional stability requirement and UL-rated applications such as for OA equipment, a gear, a cam, a slider, a lever, an arm, a clutch, a joint, a shutter, etc. in printers, copying machines, and the like.

It should be clear that compositions and articles made from the compositions made by the method of this disclosure are within the scope of the invention. All cited patents, patent applications, and other references are incorporated herein by reference in their entirety.

EXAMPLES The invention is further illustrated by the following non-limiting examples. The formulations for the Examples were prepared from the components listed in Table 1 below. Comparative Example 10 (not listed in table 1) is a commercially available lubricated, flame retardant polycarbonate composition available from General Electric Company LNP Engineering Plastics as Lubriloy LLD FR resin. Comparative Example 11 (also not listed in the table) is a commercially available lubricated polyacetal composition available from Asahi Chemical Company as LA 541 resin.

In the examples, the components are compounded in a corotating twin-screw extruder (Werner & Pfleiderer, type ZSK40), using a screw design having a mid range screw severity, at a melt temperature of 270 to 300°C, and at rates of 45 to 100 kilograms per hour. The resulting resin mixtures were then molded into bars using typical injection molding machines, ranging from laboratory-sized machines to commercial sized machines. Melt temperatures were about 270-300°C, and mold temperature were about 50-120°C. The molded bars were then tested according to the tests below.

Flammability tests were performed following the procedure of Underwriters Laboratories Inc., Bulletin 94 entitled "Tests for Flammability of Plastic Materials for Parts in Devices and Appliances, UL94" of a 0.8mm and 1.6mm test piece in the vertical position. According to this procedure, the materials were classified as V-0, V-1, or V-2 on the basis of the test results.

The tensile strength is measured per ASTM D638.

The flexural modulus is measured according to ASTM D790.

The notched impact strength is measured according to STM D256.

The head deflection temperature (HDT) is measured per ASTM D698.

The specific gravity is measured per ASTM D792.

The shrinkage value is measured per ASTM D955.

Melt viscosity is measured per ASTM D1238.

Friction and Wear Test by Thrust Washer similar to that is described in ASTM D3702. In this test, wear factor and dynamic COF are determined using a thrust washer test apparatus at a pressure of 40 psi and a velocity of 50 feet per minute. The testing is conducted the thrust washer test specimen against a counterface. Alternate counterface materials, such as steel, two types of polyacetal, are used (as specified in Table 2) as an opposite part. Wear factor K is in units of cubic inches-minutes per foot per pound per hour determined through periodic measurements during 80 hours test duration.

Flexural fatigue stress is measured according to ASTM D671, using a Satec SF2U test machine In this test, a sample of a triangular shape is clamped to a base at one end while the other end is attached to an unbalanced mass which rotates at 30 Hz (1,800 rpm) creating a cyclical load. The test is run at a constant load (constant stress level) until failure occurs. The number of cycles to failure is recorded for each stress. At least three samples are run for at least four different stress levels. Stress is measured as PSI or Kgf/mm². The data reported in the table is the failure stress at 200,0000 to 300,0000 numbers of cycle to failure.

As shown in Table 2, comparable example 10 LLD FR is a material showing excellent dimensional stability (good molding dimension accuracy) property, but poor in fatigue. Comparable example 11 is a good fatigue material, but exhibiting poor dimensional stability. On the other hand, the compositions of the invention demonstrate good wear performance with a balanced fatigue and dimensional stability properties.

**Table 1: Formulations**

| | Comp. 1 | Comp. 2 | Comp. 3 | Ex. 4 | Ex. 5* | Ex. 6 | Ex. 7* | Ex.8* | Comp.9 |
|---|---|---|---|---|---|---|---|---|---|
| Lexan polycarbonate resin 101-111 | 5.00 | 20.00 | 30 | **40** | **30** | **40** | - | - | |
| Valox PBT resin 315 | 60.57 | 55.57 | 50.57 | **40.57** | **40.57** | **42.69** | **44.70** | **48.70** | 51.70 |
| Silane A1100-3 -aminopropyltriethoxysilane | 0.12 | 0.12 | 0.12 | **0.12** | **0.12** | - | - | - | - |
| Translink 445 - a mineral additive | 10.00 | - | - | - | **10.00** | - | - | - | - |
| Hindered phenol stabilizer | 0.07 | 0.07 | 0.07 | **0.07** | **0.07** | **0.07** | - | - | - |
| Flame retardant concentrate (4 comp.) | 15.00 | 15.00 | 13.00 | **13.00** | **13.00** | **13.00** | - | - | - |
| High MW SEBS impact modifier | 6.00 | 6.00 | 2.0 | **2.0** | **2.0** | | - | - | - |
| Mono Zinc Phosphate (mzp) | 0.24 | 0.24 | 0.24 | **0.24** | **0.24** | **0.24** | - | - | - |
| Quant. Petrothene - a LLDPE | 3.00 | 3.00 | - | - | - | - | - | - | - |
| Lubriloy PDX-F-964841 -a modified LLDPE | - | - | 4.00 | **4.00** | **4.00** | **4.00** | **4.00** | **4.00** | 4.00 |
| Sb203/PE concentrate (80/20) | - | - | - | - | - | - | **6.70** | **6.70** | 6.70 |
| Hindered phenol anti-oxidant | - | - | - | - | - | - | **0.10** | **0.10** | 0.10 |
| SAPP - an anti-oxidant | - | - | - | - | - | - | **0.30** | **0.30** | 0.30 |
| Lexan polycarbonate resin 131-111 | - | - | - | - | - | - | **15.00** | **11.00** | 8.00 |
| Flame retardant TBBPA/BPA copolymer | - | - | - | - | - | - | **29.00** | **29.00** | 29.00 |
| Encapsulated PTFE | - | - | - | - | - | - | **0.20** | **0.20** | 0.20 |

| | | | | | | | | | |
|---|---|---|---|---|---|---|---|---|---|
| - Lubriloy PDX-F-96484I resin is a commercially available modified LLDPE resin from GE LNP Engineering Plastics in Thorndale, PA. - Comparative Example 10 (not in the table 1) is a commercially available lubricated, flame retardant polycarbonate composition available from General Electric Company LNP Engineering Plastics as Lubriloy LLD FR resin. Comparative Example 11 (not in the table 1) is a commercially available lubricated polyacetal composition available from Asahi Chemical Company as LA 541 resin. * Not of the invention. | | | | | | | | | |

**Table 2**

| Flex fatigue stress 1.5-1.6M cycles @ 1800 cycle / min | Comp. 1 | Comp. 2 | Comp. 3 | Ex. 4 | Ex. 5* | Ex. 6 | Ex.7* | Ex. 8* | Comp. 9 | Comp. 10 | Comp. 11 |
|---|---|---|---|---|---|---|---|---|---|---|---|
| Flex Fatigue Stress @ 2.0- 3.0M number of cycles to failure (psi) | 3341-3571 | >2995 | >2834 | >2834 | >2834 | >2834 | >2974 | >2974 | >2974 | 1648-2197 | 3456-3571 |
| **MECHANICAL/PHYSICAL** | | | | | | | | | | | |
| Tensile Strength, MPa | 51.8 | 47.8 | 55.2 | 56.5 | 53.4 | 55.0 | 59.4 | 58.0 | 57.3 | 57.3 | 53.8 |
| Tensile Elongation(%) | 8.7% | 35% | 89% | 160% | 25% | 123% | 83% | 73% | 55% | 70% | 18% |
| Flexural Modulus(Mpa) | 2460 | 1940 | 2000 | 2000 | 2190 | 2020 | 2150 | 2140 | 2110 | 2144 | 2220 |
| Flexural Strength(Mpa) | 82.3 | 75 | 82.1 | 82.6 | 81.6 | 81.3 | 84.4 | 84.4 | 84.3 | 87.3 | 81.8 |
| Notched Impact(J/m) | 52.8 | 155.9 | 104 | 137 | 92.2 | 124 | 84.7 | 83.0 | 82.8 | 725.4 | 84.9 |
| **HDT, 264psi - °C** | 58 | 62 | 73 | 87 | 77 | 88 | 93 | 88 | 84 | 130 | 117 |
| **HDT, 66psi - °C Density** | 106 | 114 | 113 | 117 | 116 | 118 | 141 | 140 | 139 | 142 | - |
| | | | | | | | | | | | |
| Specific gravity | 1.43 | 1.3 | 1.3 | 1.28 | 1.36 | 1.28 | 1.33 | 1.33 | 1.34 | 1.232 | 1.36 |
| **shrinkage (flow)** | 0.018 | 0.017 | 0.013 | 0.010 | 0.011 | 0.011 | 0.011 | 0.012 | 0.013 | 0.005 | 0.238 |
| **shrinkage (TD)** | 0.014 | 0.019 | 0.013 | 0.010 | 0.012 | 0.011 | 0.012 | 0.013 | 0.014 | 0.006 | 0.031 |
| MVR (at 266°C / 5kg) | 38.4 | 32.3 | 22.4 | 24.3 | 23.9 | 25.0 | 11.7 | 12.5 | 13.1 | 12.4 | 11.8 |
| **UL rating @1/16"** | V0 | V2 | V0 | V0 | V0 | V0 | V0 | V0 | V0 | V2 | N/A |
| **Thrust Washer Wear Testing** | | | | | | | | | | | |
| Wear factor vs M90-44* | 208 | 235 | 263 | 229 | 289 | 248 | 287 | 286 | 299 | 43 | 1007 |
| COF vs M90-44 | 0.265 | 0.215 | 0.220 | 0.210 | 0.200 | 0.22 | 0.221 | 0.233 | 0.243 | 0.179 | 0.124 |
| Wear factor vs LA541 | 44 | 53 | 59 | 47 | 42 | 93 | 38 | 65 | 50 | 23 | 295 |
| COF vs LA541 | 0.240 | 0.223 | 0.180 | 0.180 | 0.190 | 0.22 | 0.180 | 0.177 | 0.172 | 0.16 | 0.080 |
| Wear factor vs steel | 2 | 18 | 3 | 22 | 21 | 42 | 23 | 36 | 27 | 60 | 21 |
| COF vs steel | 0.316 | 0.333 | 0.390 | 0.395 | 0.363 | 0.363 | 0.312 | 0.332 | 0.256 | 0.16 | 0.480 |

| | | | | | | | | | | | |
|---|---|---|---|---|---|---|---|---|---|---|---|
| * M90-44 is a commercially polyacetal resin from Polyplastics. * Examples not of the invention. | | | | | | | | | | | |

## Claims

1. A thermoplastic composition consisting essentially of
35 to 50 wt. % of a polycarbonate (component A);
35 to 50 wt. % of a polyalkylene terephthalate, a polyalkylene naphthanoate resin, or blends thereof (component B);
0.5 to 4 wt. % of a modified polyolefin (component C) modified by an unsaturated monomer having a glycidyloxy group, an unsaturated monomer having a carboxyl group, an acid anhydride group, an acid amide group or an imide group; and 2 to 30 wt. % of a flame retardant agent (component D).

2. The thermoplastic composition of claim 1, wherein the component B is a poly(1,4-butylene terephthalate).

3. The thermoplastic composition of claim 1 or 2, wherein the component D is present in an amount of 5 to 15 wt. %.

4. The thermoplastic composition of any of the preceding claims, wherein the component D is selected from the group of brominated compounds, phosphoric ester type flame retardants, halogenated phosphoric ester type flame retardants, polyphosphate type flame retardants, red phosphorus type flame retardants, and metal hydroxide flame retardants.

5. The thermoplastic composition of any of the preceding claims, wherein the component D is a brominated compound or a halogenated phosphorus type flame retardant.

6. The thermoplastic composition of any of the preceding claims, consisting essentially of:
35 to 50 wt, % of a polycarbonate (component A);
35 to 50 wt. % of a poly(1,4-butylene terephthalate) (component B);
0.5 to 4 wt. % of a modified polyolefin (component C) modified by an unsaturated monomer having a glycidyl epoxy group and an unsaturated monomer having a carboxyl group or an acid anhydride group, or 0.5 to 4 wt. % of a polyolefin modified with functional groups containing imide acid by any desired means; and
2 to 30 wt. % of brominated compounds or a phosphoric ester type flame retardant or a halogenated phosphoric ester type flame retardant (component D).

7. The thermoplastic composition of any of the preceding claims, wherein the composition has a flammability rating of V-0 in UL-94 flame retardancy test.

8. Articles manufactured from the composition of any of the preceding claims.

9. A method comprising blending to form a thermoplastic composition:
35 to 50 wt. % of a polycarbonate (component A);
35 to 50 wt. % of a polyalkylene terephthalate, a polyalkylene naphthanoate resin, or blends thereof (component B);
0.5 to 4 wt. % of a modified polyolefin (component C) modified by an unsaturated monomer having a glycidyloxy group, an unsaturated monomer having a carboxyl group, an acid anhydride group, an acid amide group or an imide group; and
2 to 30 wt. % of a flame retardant agent (component D).

## Patentansprüche

1. Thermoplastische Zusammensetzung, im wesentlichen bestehend aus:
35 bis 50 Gew.-% eines Polycarbonats (Komponente A);
35 bis 50 Gew.-% eines Polyalkylenterephthalats, eines Polyalkylennaphtanoatharzes oder von Mischungen davon (Komponente B);
0,5 bis 4 Gew.-% eines modifizierten Polyolefins (Komponente C), das durch ein ungesättigtes Monomer mit einer Glycidyloxygruppe, ein ungesättigtes Monomer mit einer Carboxylgruppe, einer Säureanhydridgruppe, einer Säureamidgruppe oder einer Imidgruppe modifiziert ist; und
2 bis 30 Gew.-% eines Flammschutzmittels (Komponente D).

2. Thermoplastische Zusammensetzung nach Anspruch 1, in der es sich bei der Komponente B um Poly(1,4-butylenterephthalat) handelt.

3. Thermoplastische Zusammensetzung nach Anspruch 1 oder 2, in der die Komponente D in einer Menge von 5 bis 15 Gew.-% vorliegt.

4. Thermoplastische Zusammensetzung nach einem der vorhergehenden Ansprüche, in der die Komponente D aus der Gruppe bromierte Verbindungen, Flammschutzmittel vom Typ Phosphorsäureester, Flammschutzmittel vom Typ halogenierter Phosphorsäureester, Flammschutzmittel vom Typ Polyphosphat, Flammschutzmittel vom Typ roter Phosphor und Metallhydroxid-Flammschutzmittel ausgewählt ist.

5. Thermoplastische Zusammensetzung nach einem der vorhergehenden Ansprüche, in der es sich bei der Komponente D um eine bromierte Verbindung oder ein Flammschutzmittel vom Typ halogenierter Phosphor handelt.

6. Thermoplastische Zusammensetzung, im wesentlichen bestehend aus:
35 bis 50 Gew.-% eines Polycarbonats (Komponente A);
35 bis 50 Gew.-% eines Poly(1,4-butylenterephthalat)s (Komponente B);
0,5 bis 4 Gew.-% eines modifizierten Polyolefins (Komponente C), das durch ein ungesättigtes Monomer mit einer Glycidylepoxygruppe und ein ungesättigtes Monomer mit einer Carboxylgruppe oder einer Säureanhydridgruppe modifiziert ist, oder 0,5 bis 4 Gew.-% eines Polyolefins, das durch ein beliebiges gewünschtes Mittel mit Imidsäure enthaltenden funktionellen Gruppen modifiziert ist; und
2 bis 30 Gew.-% bromierte Verbindungen oder ein Flammschutzmittel vom Typ Phosphorsäureester oder ein Flammschutzmittel vom Typ halogenierter Phosphorsäureester (Komponente D).

7. Thermoplastische Zusammensetzung nach einem der vorhergehenden Ansprüche mit der Brandklasse V-0 im UL-94-Flammwidrigkeitstest.

8. Gegenstände, hergestellt aus der Zusammensetzung nach einem der vorhergehenden Ansprüche.

9. Verfahren, bei dem man
35 bis 50 Gew.-% eines Polycarbonats (Komponente A);
35 bis 50 Gew.-% eines Polyalkylenterephthalats, eines Polyalkylennaphtanoatharzes oder von Mischungen davon (Komponente B);
0,5 bis 4 Gew.-% eines modifizierten Polyolefins (Komponente C), das durch ein ungesättigtes Monomer mit einer Glycidyloxygruppe, ein ungesättigtes Monomer mit einer Carboxylgruppe, einer Säureanhydridgruppe, einer Säureamidgruppe oder einer Imidgruppe modifiziert ist; und
2 bis 30 Gew.-% eines Flammschutzmittels (Komponente D)
zu einer thermoplastischen Zusammensetzung vermischt.

## Revendications

1. Composition thermoplastique constituée essentiellement:
de 35 à 50 % en poids d'un polycarbonate (composant A);
de 35 à 50 % en poids d'une résine de polyalkylène-téréphtalate, d'une résine de polyalkylène-naphtanoate, ou de leurs mélanges (composant B);
de 0,5 à 4 % en poids d'une polyoléfine modifiée (composant C), modifiée par un monomère insaturé renfermant un groupe glycidyloxy, un monomère insaturé renfermant un groupe carboxyle, un groupe anhydride d'acide, un groupe amide d'acide ou un groupe imide; et
de 2 à 30 % en poids d'un agent ignifugeant (composant D).

2. Composition thermoplastique selon la revendication 1, dans laquelle le composant B est le poly(1,4-butylène-téréphtalate).

3. Composition thermoplastique selon la revendication 1 ou 2, dans laquelle le composant D est présent en une quantité de 5 à 15 % en poids.

4. Composition thermoplastique selon l'une quelconque des revendications précédentes, dans laquelle le composant D est choisi parmi le groupe de composés bromés, d'agents ignifugeants du type ester phosphorique, d'agents ignifugeants du type ester phosphorique halogéné, d'agents ignifugeants du type polyphosphate, d'agents ignifugeants du type phosphore rouge et d'agents ignifugeants du type hydroxyde métallique.

5. Composition thermoplastique selon l'une quelconque des revendications précédentes, dans laquelle le composant D est un composé bromé ou un agent ignifugeant du type phosphoré halogéné.

6. Composition thermoplastique selon l'une quelconque des revendications précédentes, constituée essentiellement:
de 35 à 50 % en poids d'un polycarbonate (composant A);
de 35 à 50 % en poids d'un poly(1,4-butylène-téréphtalate) (composant B);
de 0,5 à 4 % en poids d'une polyoléfine modifiée (composant C), modifiée par un monomère insaturé renfermant un groupe glycidylépoxy et un monomère insaturé renfermant un groupe carboxyle ou un groupe anhydride d'acide ou de 0,5 à 4 % en poids d'une polyoléfine modifiée par des groupes fonctionnels renfermant un imide-acide par un moyen quelconque souhaité; et
de 2 à 30 % en poids de composés bromés ou d'un agent ignifugeant du type ester phosphorique ou d'un agent ignifugeant du type ester phosphorique halogéné (composant D).

7. Composition thermoplastique selon l'une quelconque des revendications précédentes, la composition présentant une classification d'inflammabilité de V-0 dans l'essai d'ignifugeage UL-94.

8. Articles fabriqués à partir de la composition selon l'une quelconque des revendications précédentes.

9. Procédé comprenant le mélangeage pour former une composition thermoplastique:
de 35 à 50 % en poids d'un polycarbonate (composant A);
de 35 à 50 % en poids d'une résine de polyalkylène-téréphtalate, d'une résine de polyalkylène-naphtanoate, ou de leurs mélanges (composant B);
de 0,5 à 4 % en poids d'une polyoléfine modifiée (composant C), modifiée par un monomère insaturé renfermant un groupe glycidyloxy, un monomère insaturé renfermant un groupe carboxyle, un groupe anhydride d'acide, un groupe amide d'acide ou un groupe imide; et
de 2 à 30 % en poids d'un agent ignifugeant (composant D).
